# EUROPEAN PATENT APPLICATION

(11) **EP 4 618 344 A1**
(43) Date of publication of application: **17.09.2025**
(21) Application number: 24162671.2
(22) Date of filing: 11.03.2024
(51) Int. Cl.: H02H 3/40

(54) **DISTANCE PROTECTION FOR FAULT DETECTION**

(71) Applicant: Hitachi Energy Ltd, 8050 Zürich (CH)
(72) Inventor: WANG, Jianping, 724 60 Västerås (SE); LI, YouYi, 722 19 Västerås (SE); GAJIC, Zoran, 723 47 Västerås (SE); HOQ, Md Tanbhir, 722 46 Västerås (SE)
(74) Representative: Vossius & Partner Patentanwälte Rechtsanwälte mbB

(57) **Abstract**

The present invention provides a method and device for determining a symmetrical fault in a three-phase transmission line. The method comprises the steps of obtaining a real time current signal and a real time voltage signal at relay location of one end of the transmission line for each of measured phase loops, determining a reach point voltage signal phasor and a relay point voltage signal phasor based on the real time current signal and the real time voltage signal for each of measured phase loops, determining an operation signal and a restrain signal for each of measured phase loops, determining whether the operation signal exceeds the restrain signal for a measured phase loop, and detecting a fault if it is determined that the operation signal exceeds the restrain signal or the cosine of an angle difference between the relay location phasor and the reach point of voltage phasor is below zero.

## Description

The present disclosure relates to a method, a device, and a system for controlling and protecting an electrical system comprising a transmission line.

In an electrical system comprising a transmission line, it is of high importance to accurately identify a fault type for further corrective actions. Among others, a distance protection is widely used to protect the transmission line. However, due to the increasing use of variable renewable sources, it has become challenging for conventional methods to process the measurements due to distorted fault current waveforms and higher harmonic components, especially for Doubly fed induction generators (DFIG) connected transmission lines. The following briefly discusses the basic principle of the distance protection and the conventional methods being utilized therewith.

Conventionally, the distance protection relies on computing the measured line impedance, which reflects the positive-sequence impedance of protected transmission lines. The calculation is based on Ohm's law as given below:
There may be two types of calculation loops for impedance measurements: 1) based on phase-to-ground loop and 2) based on phase-phase loop measurement. Phase-to-ground loop impedance may be computed as follows: ${Z}_{PG} = \frac{{V}_{PG}}{{I}_{PG} + {K}_{0} {I}_{0}}$ wherein
*V_{PG}* denotes a phase-to-ground voltage measured at a relay location of a transmission line,
*I_{PG}* denotes a phase-to-ground loop current measured at a relay location of a transmission line such as *I_{A}, I_{B}, I_{C},*
*I*₀ denotes a measured zero-sequence current from the three phase currents, i.e., ${I}_{0} = \frac{1}{3} ( {I}_{A} +$${I}_{B} + {I}_{C} )$,
*K*₀ denotes a compensation factor, e.g., ${K}_{0} = \frac{{Z}_{0} - {Z}_{1}}{{Z}_{1}}$*,*
*Z*₀ denotes a zero-sequence impedance as seen from the location of the relay to the end of the protected zone, and
*Z*₁ denotes a positive-sequence impedance as seen from the location of the relay to the end of the protected zone.

Phase-to-phase loop impedance may be computed as follows. ${Z}_{PP} = \frac{{V}_{Phase , 1} - {V}_{phase , 2}}{{I}_{Phase , 1} - {I}_{phase , 2}}$ Wherein *V*_{*Phase,*1} and *V*_{*Phase,*2} denote phase-to-ground voltages measured at the relay location of the transmission line, e.g., *V_{A}* and *V_{B}, V_{B}* and *V_{C},* and *V_{C}* and *V_{A}*, and wherein *I*_{*phase,*1} and *I*_{*Phase,*2} denote phase-to-ground currents measured at the relay location of the transmission line, e.g., *I_{A}* and *I_{B},I_{B}* and *I_{C},*and *I_{C}* and *I_{A}.*

As evident from the equations above, the calculations are based on Ohm's law, which requires that both the input variables such as voltages and currents must be in the same frequency domain. For 50 Hz power systems, those measurement inputs should be 50 Hz phasors, so as to justify the calculations above.

However, in case of variable renewable source connected lines, the measured voltages and currents in the variable renewable source side might not have the same frequencies during fault period, so that equations (1) and (2) might have errors in the calculation results. This may lead to misjudgements such as over-reach or under-reach for a distance protection.

In view of the above, a first method may utilize sequence voltages with the phase domain calculation to the distance protection reach point. The basic concept of this method is to calculate reach point sequence voltages: positive-sequence voltage at the reach point *V*_{*a*1}*_{,rp},* a negative-sequence voltage at the reach point *V*_{*a*2}*_{,rp},* and a zero-sequence voltage at the reach point *V*_{*a*0,*rp*}. Then, an operation quantity of eq. (3) and a restrain quantity of eq. (4) can be computed and compared with each other for AG fault in the reach point as an example. ${V}_{op} = {V}_{a 0 , rp} + {V}_{a 2 , rp}$ ${V}_{restraint} = {V}_{a 1 , rp}$

If the operation quantity, *Vₒₚ* is larger than the restrain quantity, *Vᵣₑₛₜᵣₐᵢₙ,* an internal fault within the protection zone can be determined, so that a trip signal can be issued. It is noted that equations (3) and (4) are computed for phase-A related unsymmetrical fault detection such as AG fault, ABG fault, ACG fault, AB fault, and AC fault. In case of phase-B related faults or phase-C related faults, the calculations of equations (3) and (4) may be based on the respective phase signals. For example, for a BG fault, the operation value if formed by summation of *V_{b0,rp}* and *V_{b2,rp}* while the restrain quantity can be formed by using *V_{b1,rp}.* Here, *V_{b0,rp}* is the zero sequence voltage calculated in the reach point for phase B. *V_{b2,rp}* is the negative sequence voltage calculated in the reach point for phase B. *V_{b1,rp}* is the positive sequence voltage calculated in the reach point for phase B.

The calculation of the reach point sequence voltages can be based on the phasor domain. In this case, the reach point sequence voltages such as *V*_{*a*1}*_{,rp}, V*_{*a*2}*_{,rp},* and *V*_{*a*0*,rp*} can be calculated from the relay measurement point by subtracting the corresponding sequence voltage drops along the line. ${V}_{a 1 , rp} = {V}_{a 1 , IED} - {Z}_{1 , set} ⋅ {I}_{a 1}$ ${V}_{a 2 , rp} = {V}_{a 2 , IED} - {Z}_{2 , set} ⋅ {I}_{a 2}$ ${V}_{a 0 , rp} = {V}_{a 0 , IED} - {Z}_{0 , set} ⋅ {I}_{a 0}$

Here, *Z*_{1,}*ₛₑₜ, Z*₂*_{,set}, and Z*_{3*,set*} denote a positive-sequence impedance, a negative-sequence impedance and a zero-sequence impedance from relay location to the reach point, respectively. $\begin{matrix}{U}_{a . rp} = {U}_{a 1 , rp} + {V}_{a 2 , rp} + {V}_{a 0 , rp} \\ {U}_{b , rp} = {a}^{2} ∗ {U}_{a , rp} \\ {U}_{c , rp} = a ∗ {U}_{a , rp}\end{matrix}$ with *a*=-0.5+j0.866 and *a*²=-0.5-j0.866.

It is also possible to calculate the reach point voltages based on the phasor domain by using line parameters, in particular by using original three phase transmission line self-impedances and coupling impedances with original three phase currents in phase domain as follows. $\left(\begin{matrix}{U}_{a , rp} \\ {U}_{b , rp} \\ {U}_{c , rp}\end{matrix}\right) = Reach _ setting \times \left(\begin{matrix}{Z}_{ss} & {Z}_{mm} & {Z}_{mm} \\ {Z}_{mm} & {Z}_{ss} & {Z}_{mm} \\ {Z}_{mm} & {Z}_{mm} & {Z}_{ss}\end{matrix}\right) \times \left(\begin{matrix}{I}_{A} \\ {I}_{B} \\ {I}_{C}\end{matrix}\right)$

Here, *Zₘₘ* denotes a transmission line self-impedance for each phase within a three phase transmission line, *Zₘₘ* denotes the coupling impedance between each two phases such as AB, BC, and CA. It is assumed that the three phase lines are transposed with the same coupling impedance between each two phases and same self-impedance. *I_{A}, I_{B},* and *I_{C}* are three phase currents in phasor domain. *U_{a,rp}, U_{b,rp},* and *U_{c,rp}* are phasor domain voltages calculated to the reach point based on setting value as *"Reach_setting",* which is normally equal to 0.8 as 80% of the line length for a typical setting for line protection.

The reach point voltages can also be calculated based on the time domain. Here, two steps are proposed by using time domain differential equations, as follows:
In a first step, reach point voltages are calculated based on local IWD measured voltage and current signals and line impedance parameters R and L. Here, *R=R₁* is the positive sequence resistance to reach point and *L=L₁* is the positive inductance to the reach point. $\begin{matrix}{u}_{a _ RP} \left(t\right) = {u}_{a} \left(t\right) - \left[R⋅\left({i}_{a}\left(t\right)+{k}_{R}⋅3{i}_{0}\left(t\right)\right)+L⋅\frac{d \left({i}_{a}\left(t\right)+{k}_{L}⋅3{i}_{0}\left(t\right)\right)}{dt}\right] \\ {u}_{b _ RP} \left(t\right) = {u}_{b} \left(t\right) - \left[R⋅\left({i}_{b}\left(t\right)+| {k}_{R} ⋅ 3 {i}_{0}\left(t\right)\right)+L⋅\frac{d \left({i}_{b}\left(t\right)+{k}_{L}⋅3{i}_{0}\left(t\right)\right)}{dt}\right] \\ {u}_{c _ RP} \left(t\right) = {u}_{c} \left(t\right) - \left[R⋅\left({i}_{c}\left(t\right)+{k}_{R}⋅3{i}_{0}\left(t\right)\right)+L⋅\frac{d \left({i}_{c}\left(t\right)+{k}_{L}⋅3{i}_{0}\left(t\right)\right)}{dt}\right] \\ {k}_{R} = \frac{{R}_{0} - {R}_{1}}{3 {R}_{1}} {k}_{X} = \frac{{X}_{0} - {X}_{1}}{3 {X}_{1}}\end{matrix}$
*u*_{*a_*RP}(*t*): Reach point phase A voltage
*u_{b_RP}*(*t*): Reach point phase B voltage
*u_{c_RP}*(*t*): Reach point phase C voltage

Here *R₀* is the zero-sequence resistance to the reach point and *X₀* is the zero-sequence reactance to the reach point. *i*₀ is the zero-sequence current. *uₐ, u_{b}, u_{c}* are relay measured three phase voltages and *iₐ, i_{b}, i_{c}* are relay measured three phase currents.

In a second step, the reach point voltages are converted to phasors by using a Fourier transformation.

Moreover, the reach point voltage calculation can also be done with other alternative solutions such as distributed transmission line modelling either based on telegraph equations or based on hyperbolic trigonometric functions for receiving end and sending end voltage calculations for long lines. Another solution can also be done by using a Pi-model based on lump line parameters for short length of lines.

However, there is a need for an improved method, device, and system for controlling an electrical system comprising a transmission line.

Specifically, power system faults in a transmission line include phase A to ground fault, phase B to ground fault, phase C to ground fault, phase AB to ground fault, phase BC to ground fault, phase CA to ground fault, phase AB fault, phase BC fault, phase CA fault and the three phase faults ABC fault and ABC to ground fault. During ABC fault or ABCG fault, both negative sequence and zero sequence components become zero so that equation (3) is no longer available for detecting ABC/ABCG fault. Therefore, a new solution is required.

Accordingly, the present disclosure provides a method and device for determining all types faults including symmetrical faults such as ABC/ABCG faults in a three-phase transmission line, as defined by the appended independent claims; the dependent claims describe embodiments of the present disclosure.

The method according to the present disclosure comprises the steps of obtaining a real time current signal and a real time voltage signal at relay location of one end of the transmission line for each of measured phase loops, determining a reach point voltage signal phasors and a relay point voltage signal phasors based on the real time current signal and the real time voltage signal for each of the measured phase loops, determining an operation signal and a restrain signal for each of the measured phase loops, determining whether the operation signal exceeds the restrain signal for a given measured phase loop, and detecting a fault if it is determined that the operation signal exceeds the restrain signal or the cosine of the angle difference between the relay point voltage phasor and the reach point voltage phasor is negative.

The device according to the present disclosure comprises a processor being configured for performing any of the methods disclosed herein.

A further method according to the present disclosure comprises the steps of obtaining a real time current signal and a real time voltage signal at relay location of one end of the protected transmission line for each of measured phase loops, determining a reach point voltage signal and a relay point voltage signal based on the real time current signal and the real time voltage signal for each of the measured phase loops, determining an operation quantity and a restrain quantity and optionally a phasor for each of the measured phase loops, determining whether the operation quantity exceeds the restrain quantity for a given measured phase loop, determining whether the relay point phase voltage exceeds the reach point phase voltage of the measured phase loop, and detecting a fault if it is determined that the operation quantity exceeds the restrain quantity and the relay point phase voltage exceeds the reach point phase voltage.

The present disclosure is a solution based on the idea that for an internal fault, the reach point voltage is in opposite direction of local relay measured voltage while for an external fault, the reach point voltage has the same direction with local relay voltage. Accordingly, by considering phase A as an example, a solution is given by calculating a relay point voltage U_{A} and a reach point voltage U_{comp}. Thus, a new operation quantity Uₒₚ based on the calculated relay point voltage U_{A} and reach point voltage U_{comp} is determined and compared to a restrain quantity Uᵣₑₛₜᵣₐᵢₙ, so that ABC/ABCG fault can be detected. Further, a solution is given by determining a cosine of an angle difference between relay point voltage phasor and reach point voltage phasor for the measured phase loop. Thereby, a fault can be detected if it is determined that the operation signal exceeds the restrain signal and the cosine is below zero. The present disclosure may thus be used for ABC/ABCG fault detection for three phase transmission systems.

In other words, relay location phase voltages/phase to phase voltages and reach point phase voltages/phase to phase voltages are proposed to form new compensation relay operation features so that the dependability and security can be improved under variable renewable connected grid application conditions.

According to the present disclosure, the new operation quantity and the restrain quantity are determined in a phasor domain as follows. $\begin{matrix}{U}_{op} = \left|{U}_{A}-{U}_{comp}\right| \\ {U}_{restrain} = \left|{U}_{A}\right| .\end{matrix}$

The relay point voltage U_{A} and a reach point voltage U_{comp} are determined in a phasor domain or in a time domain. The reach point sequence voltages in the phasor domain may be calculated by using a Fourier Transformation method.

An internal fault may be determined when the operation quantity exceeds the restrain quantity. Equivalently, the internal fault may be determined by using a triangle function cosine to calculate the output for the phase angle difference between relay point voltage U_{A} and reach point voltage U_{comp}. Thus, an internal fault may be determined as follows. $\begin{matrix}{U}_{op} > {U}_{restrain} \\ cos \left({U}_{A _ phasor _ angle}-{U}_{com _ Phasor _ angle}\right) < 0\end{matrix}$

Here, Uₒₚ is the operation quantity, Uᵣₑₛₜᵣₐᵢₙ is the restrain quantity, *U_{A_phasor_angle}* is the phasor angle for relay point voltage U_{A} in degrees, and *U_{com_Phasor_angle}* is the phasor angle for reach point voltage U_{comp} in degrees. If the cosine is determined to be below 0, as above, a fault within Zone 1 is identified.

On the other hand, a forward external fault may be determined when the operation quantity is smaller than the restrain quantity, i.e. when, as in this case the reach voltage has the same polarity as the relay point voltage. Equivalently, the forward external fault may be determined by using the triangle function cosine to calculate the output for the phase angle difference between relay point voltage U_{A} and reach point voltage U_{comp}. Thus, a forward external fault may be determined as follows. $\begin{matrix}{U}_{op} < {U}_{restrain} \\ cos \left({U}_{A _ phasor _ angle}-{U}_{com _ Phasor _ angle}\right) > 0\end{matrix}$

Here again, Uₒₚ is the operation quantity, Uᵣₑₛₜᵣₐᵢₙ is the restrain quantity, *U_{A_phasor_angle}* is the phasor angle for relay point voltage U_{A} in degrees, and *U_{com_Phasor_angle}* is the phasor angle for reach point voltage U_{comp} in degrees. If the cosine is determined to exceed 0, as above, a forward external fault is identified.

In a preferable embodiment, a forward directional element is added by comparing the relay location voltage in one of the phases to the corresponding phase voltage at reach point. Here, considering phase A as an example, equation (13) has shown the forward direction criterion. ${U}_{A _ IED _ M} > {U}_{A _ RP _ M}$

Here, *U_{A_IED_M}* is a measured voltage phasor amplitude in phase A at relay location and *U_{A_RP_M}* is a calculated reach point voltage phasor amplitude in phase A. By adding the forward directional element, the stability for reverse fault conditions is secured. Thereby, the line protection is more reliable.

Furthermore, the disclosure provides a device for determining an internal symmetrical fault in a three-phase transmission. The device comprises a processor being configured for obtaining a real time current signal and a real time voltage signal at relay location of one end of the transmission line, determining a reach point voltage signal and a relay point voltage signal based on the real time current signal and the real time voltage signal, determining an operation signal and a restrain signal, determining whether the operation signal exceeds the restrain signal, determining whether the relay point phase voltage exceeds the reach point phase voltage, and detecting a fault if it is determined that the operation signal exceeds the restrain signal and the relay point phase voltage exceeds the reach point phase voltage.

The device may further comprise a device for obtaining the phase voltage signals on the three-phase transmission line.

The disclosure further provides a system for determining a symmetrical fault in a three-phase transmission that includes a device as described above and a three-phase transmission line.

With the present disclosure, faster, cheaper and safer determination of a symmetrical fault, in particular a symmetrical fault in a three-phase transmission line is possible. The method, device and system of the present disclosure greatly improve the dependability of existing distance protection solutions used in AC power systems either with wind farm connections or without wind farm connections.

The present disclosure will be described in more detail in the following description with reference to figures, wherein
- Fig. 1: shows an illustration of an internal three phase fault condition,
- Fig. 2: shows an illustration of an external three phase fault condition,
- Fig. 3: shows a typical transmission line connected with two source ends,
- Fig. 4: is a diagram showing measured currents and voltages at relay location,
- Fig. 5: is a diagram showing calculated reach point voltages,
- Fig. 6: is a diagram showing an operation quantity and a restrain quantity during an internal fault,
- Fig. 7: is a diagram showing a corresponding phase angle measurement and cosine values during an ABCG fault in zone 1 boundary,
- Fig. 8: is a diagram showing an operation quantity and restrain quantity during an external ABCG fault at 85% of line length,
- Fig. 9: is a diagram showing a corresponding phase angle measurement and cosine values during an external fault at 85% of line length,
- Fig. 10: shows the stability of a directional detection unit to block a three phase ABCG fault operation for reverse faults,
- Fig. 11: shows the activity of a directional element since Va_IED_M>Va_RP-M for forward faults, and
- Fig. 12: illustrates a grid following converter as usually used in wind farms,
- Fig. 13: shows the impact of a weak source on the PLL output during ABCG faults,
- Fig. 14: shows the impact of a strong source on the PLL output during ABCG faults,
- Fig. 15: shows the impact of a Non-Linear behavior of a grid following converter on known fault detection solutions,
- Fig. 16: shows the system strength impact on known voltage-based distance protection solutions, and
- Fig. 17: shows a mitigation solution for an ABCG fault at 70% of line length under weak system conditions,
- Fig. 18: shows the impact of a non-linear behavior when applying the method according to the present disclosure,
- Fig. 19: shows a flow diagram of a method according to an embodiment for phase to ground loops, and
- Fig. 20: shows a flow diagram of a method according to an embodiment for phase to phase loops.

As can be noticed by a skilled person, equations (3) and (4) have used negative sequence voltage and zero sequence voltage at the reach point as operating quantities to detect faults. This is however only applicable for unbalanced faults since there are no negative sequence voltage and zero sequence voltage available during three phase faults as balanced faults. As a result, equations (3) and (4) cannot be used for three phase fault detection in fact. The present disclosure therefore provides a new solution to cover the three phase faults, by identifying faults using a new operation quantity, as will be described in the following.

Based on the issue that the usual operation quantities are not available during three phase faults, the present disclosure relies on the new idea or solution to determine a new operation quantity Uₒₚ to be compared to a restrain quantity Uᵣₑₛₜᵣₐᵢₙ, so that ABC/ABCG fault can be detected. This can be achieved by replacing the calculations of the operation quantity and the restrain quantity as given in equations (3) and (4) above with the calculations as given in equations (10) above.

The mathematical expression of proposed solution can be given as below when using phasor domain calculated reach point voltages from equation (10). $\begin{matrix}{U}_{op} = \left|{U}_{A}-{U}_{comp}\right| \\ {U}_{restrain} = \left|{U}_{A}\right|\end{matrix}$

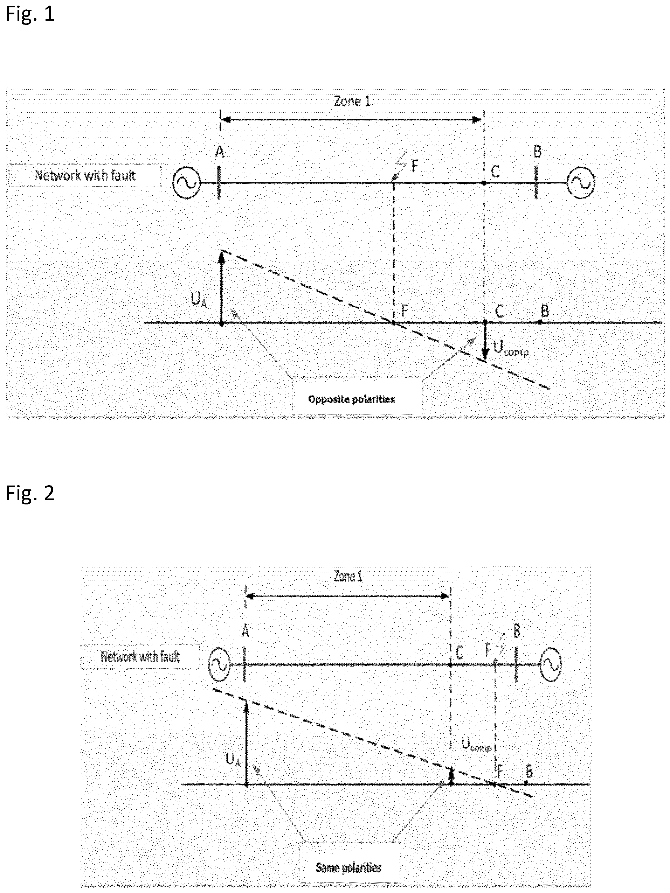

The phasor domain quantities of reach point voltage U_{comp} can be calculated by using typical Fourier Transformation methods. Reach point C denotes one end of zone 1 of the protected line, as described below with regards to Fig. 1 and Fig. 2

Based on the new operation quantity, a new solution for three phase fault detection can be provided, which is based on a comparison between the operation quantity and the restrain quantity as given above in equation (10). This new solution may be called Voltage based Distance Protection (VDP).

An internal fault is determined when the operation quantity exceeds the restrain quantity and the cosine of the angle *U_{A_phasor_angle}* - *U_{com_Phasor_angle}* is negative. This is because in case of an internal fault as is shown in Fig. 1, the difference between U_{A} and U_{comp} is larger than U_{A} alone. This is because in this case, the directions of U_{A} and U_{comp} are opposite. In other words, U_{A} and U_{comp} have the opposite polarity. This is because the reach point C is on another side of the protected transmission line with respect to the fault point F than the relay point A.

An external fault is determined when the operation quantity is smaller than the restrain quantity and the cosine of said angle is positive. This is because in case of an external fault as is shown in Fig. 2, the difference between U_{A} and U_{comp} is smallerthan U_{A} alone. This is because in this case, the directions of U_{A} and U_{comp} are the same. In other words, U_{A} and U_{comp} have the same polarity. This is because the reach point C is on the same side of the protected transmission line with respect to the fault point F as the relay point A.

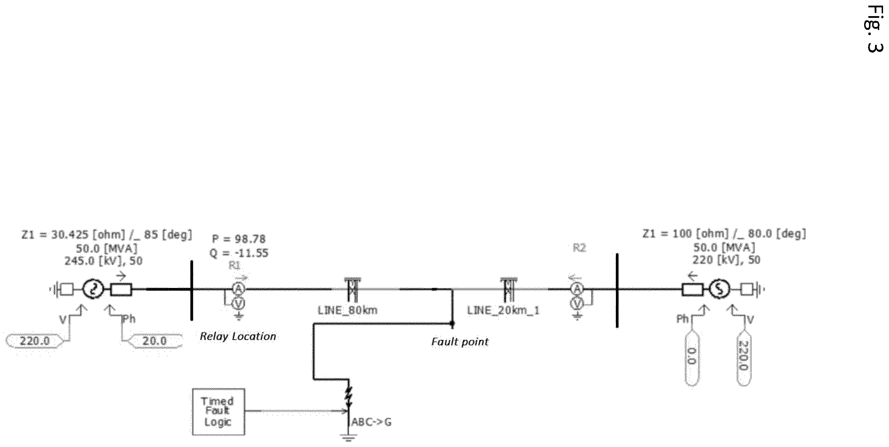

The solution proposed by the present disclosure can be given based on a test system, as shown in Fig. 3 that shows a typical transmission line connected with two source ends.

For further verification of the present method, different types of unbalanced faults have been tested by using two sources connected by a transmission line as shown in Fig. 3. The tests show that the given solution is stable under these conditions.

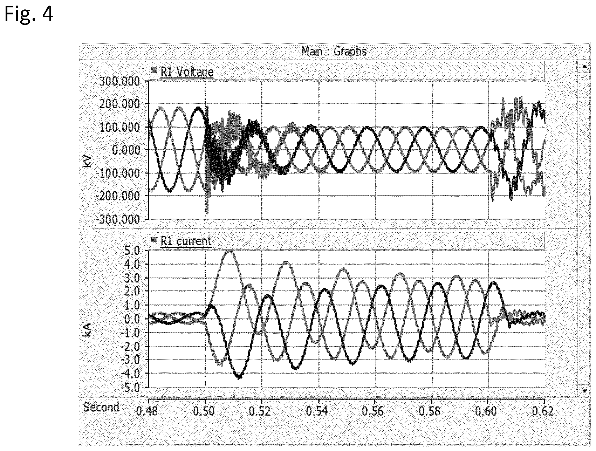

Specifically, one internal three phase fault located at 80% of line length is tested with stable results as an example. The corresponding results are shown in Figs. 4-7.

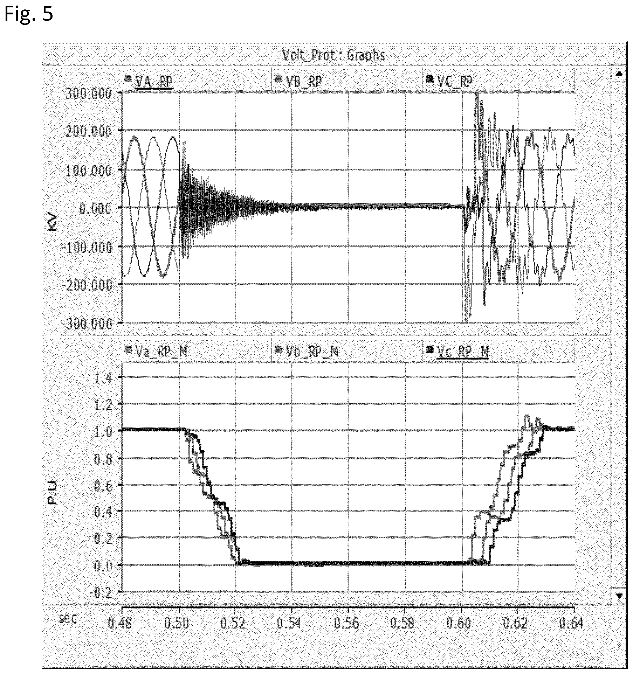

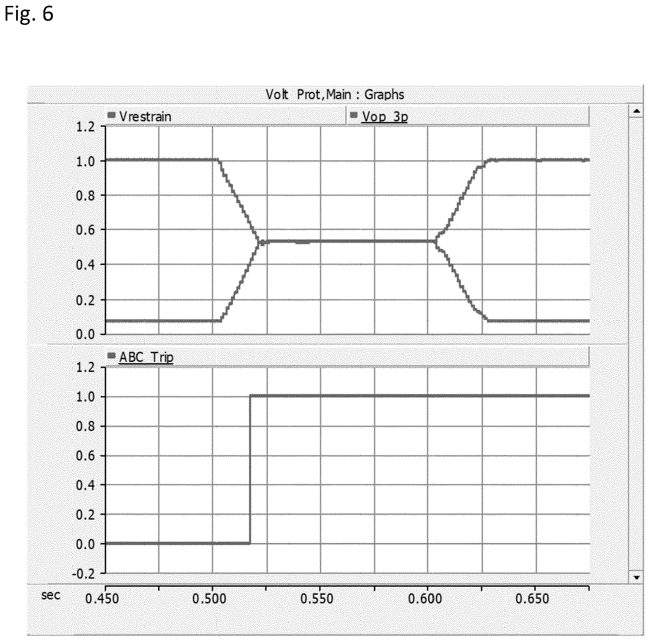

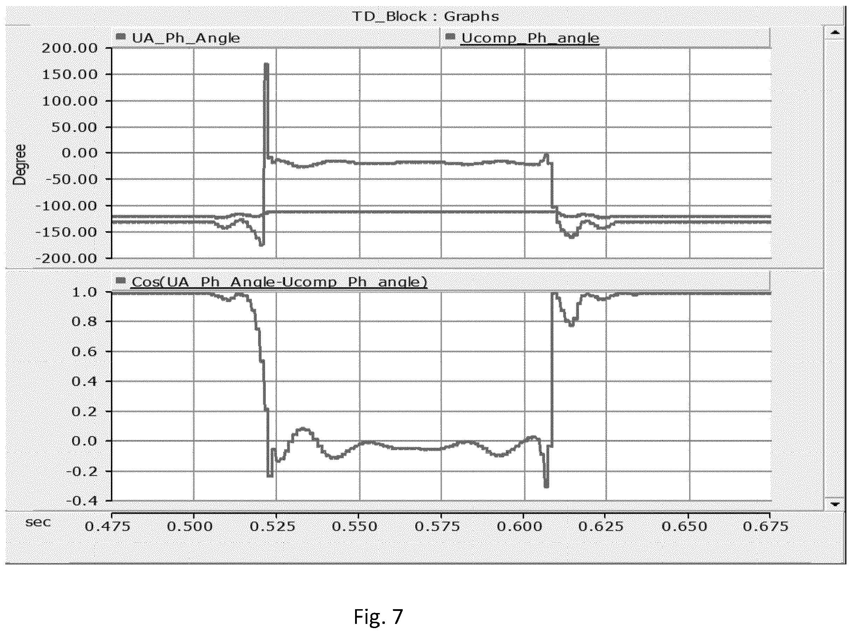

Fig. 4 shows three phase voltages during an internal three phase ABCG fault at 80% of line length in the upper window and the corresponding three phase currents in the bottom window. Fig. 5 shows the corresponding calculated reach point voltages for each of the three phases in the upper window and their mean values in the bottom window. Fig. 6 shows the corresponding operation quantity and restrain quantity in the upper window and the corresponding trip signal in the bottom window. Fig. 7 shows the phasor angle for relay point voltage *U_{A_phasor_angle}* and the phasor angle for reach point voltage *U_{com_Phasor_angle}* in the upper window, and the cosine of the angle *U_{A_phasor_angle}* - *U_{com_Phasor_angle}* in the bottom window.

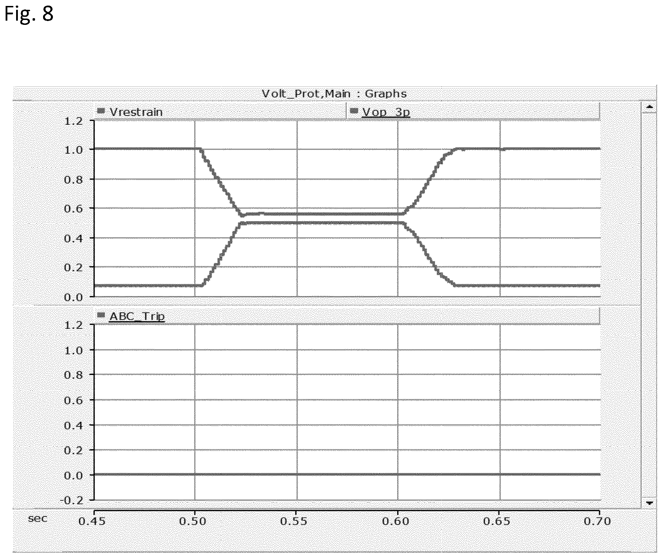

Specifically, one external three phase ABCG fault, located at 85% of line length is tested with stable results as an example. The corresponding results are shown in Fig. 8-9.

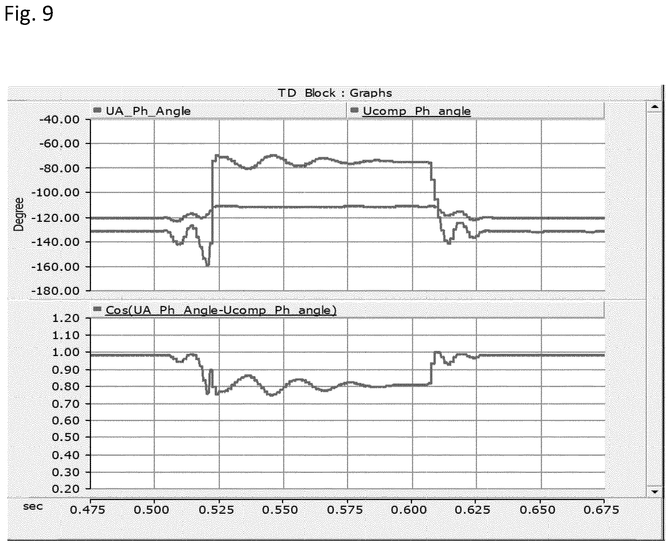

Fig. 8 shows three phase voltages during an external three phase ABCG fault at 85% of line length in the upper window and the corresponding three phase currents in the bottom window. Fig. 9 shows the corresponding calculated reach point voltages for each of the three phases in the upper window and their mean values in the bottom window.

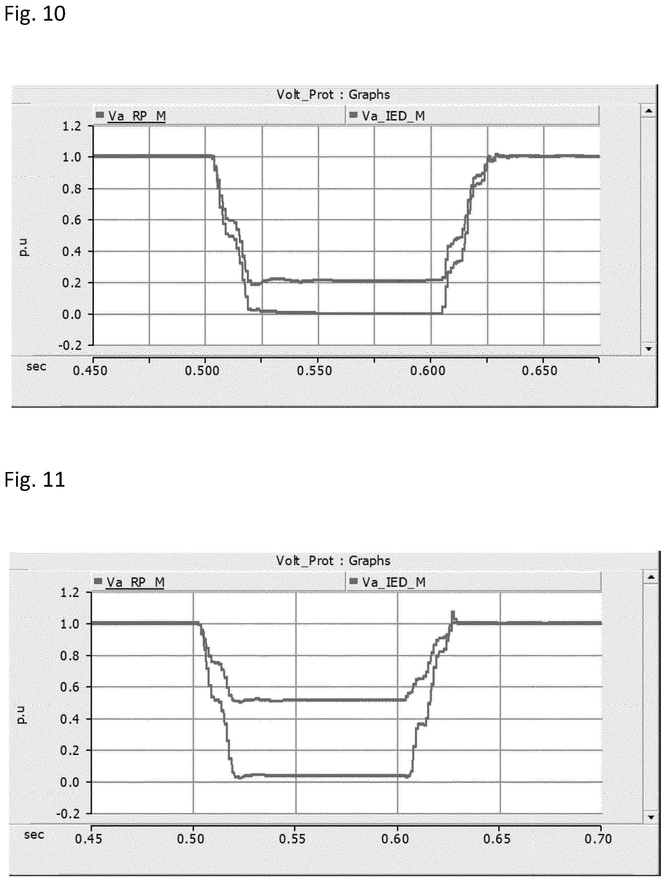

Fig. 10 shows that for reverse faults, the directional detection unit configured to perform fault detection in accordance with present disclosure will keep stable to block the three phase ABCG fault, since the local device voltage Va_IED_M does not exceed the reach point voltage Va_RP_M. Fig. 11 shows that for forward faults, the directional element will always be active, since the local device voltage Va_IED_M exceeds the reach point voltage Va_RP_M.

The presented results thus confirm that the solution proposed by the present disclosure is able to reliably detect three phase faults in the protected zone.

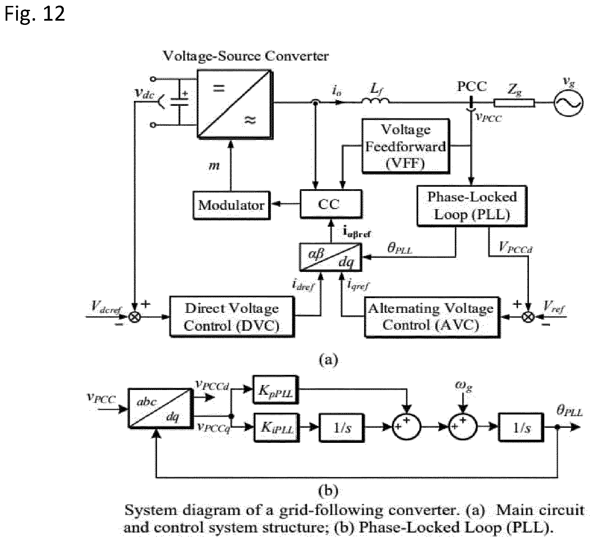

In the specific application of transmission lines in power grids involving renewable sources, such as wind farms, it is natural to see different source strengths in the grid side. In the power system protection domain, the source strength is measured as source impedance ratio (SIR) which is the ratio of source impedance (*Zₛ*) divided by protection line impedance (*Z₁*). This means if SIR is low, the source is strong and if SIR is higher, the source is weak. On the other hand, as it is well known, most of wind farms are still using converters which are controlled with grid-following controllers. The typical control of grid following converter can be seen in Fig. 12, where (a) shows the mains circuit and the control system structure, and (b) shows the phase-locked loop (PLL).

The main demand of grid following converter is to use the grid side three phase voltage inputs (*Vpcc*) at point of common coupling (PCC) to form a phase lock loop (PLL) so that the converter outputs will have the same frequency as connected grids. As it can be seen from Fig. 12, the output of PLL is a phase angle which is proportional to the given power grid frequency. In case of weak system in grid side, it is possible for the PLL output loss synchronization with given grid during three phase fault period.

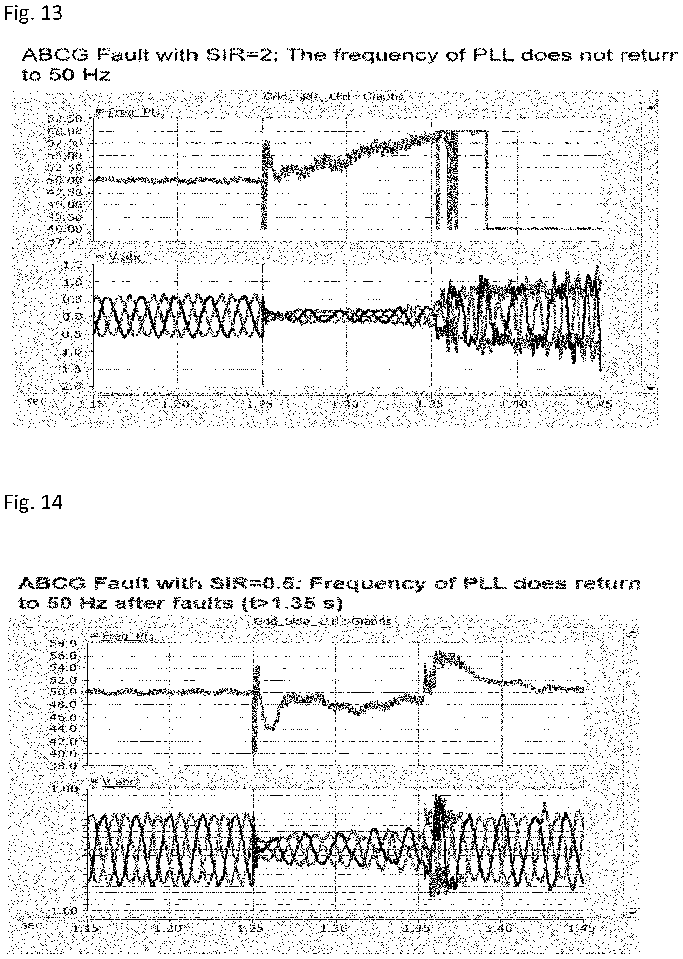

To verify this phenomenon, an ABCG fault is applied in the transmission line at 70% of line length with a Type 4 wind farm connected grid with weak source (SIR=2). Fig. 13 shows the impact on a PLL output during an ABCG fault and indicates that after an ABCG fault, the PLL output frequency does not return to 50 Hz, which means that the grid follower controller lost synchronization with the connected grids.

If the grid side source strength is increased to SIR=0.5, the PLL output will be in synchronization with the grid frequency even after ABCG faults. Fig. 13 shows the results.

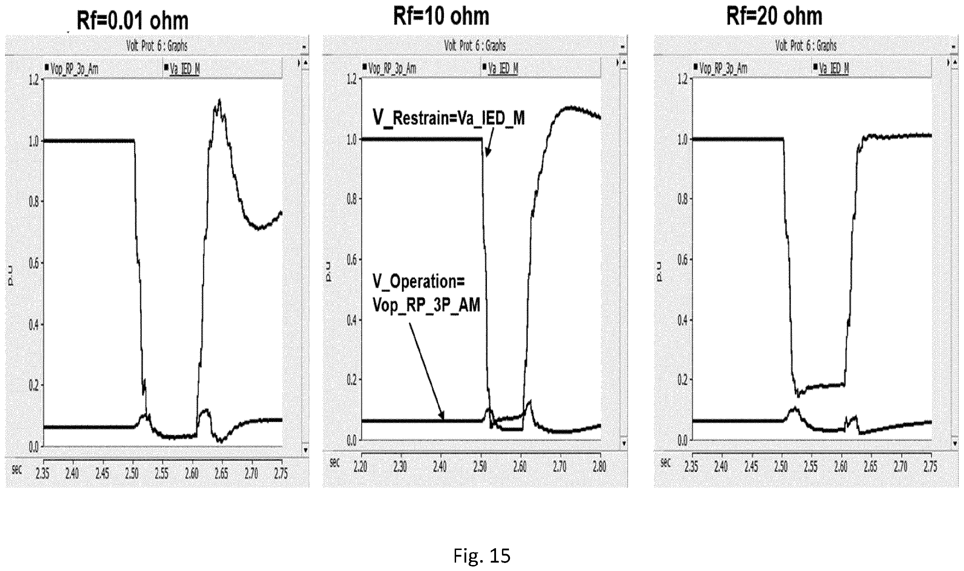

The above issue with weak source on the grid side will thus introduce a non-linear behavior for a fault detection solution described above for ABCG fault detection. Fig. 15 shows this type of non-linear issues when grid side is a weak source with SIR=2. For ABCG fault at boundary of Zone 1 setting with Rf=0.01 ohm, the operation value Vop_RP_3p_Am (lower line in the diagram) is in the same level as restrain value V_IED_local_D. Then the same fault is applied with Rf=10 ohm, it is noticed that there is short period of cross section between operational value and restrain value. As a result, the previously existing protection solution might trip incorrectly. On the other hand, if Rf is increased to Rf=20 ohm, the operational value and restrain value has a clear gap again.

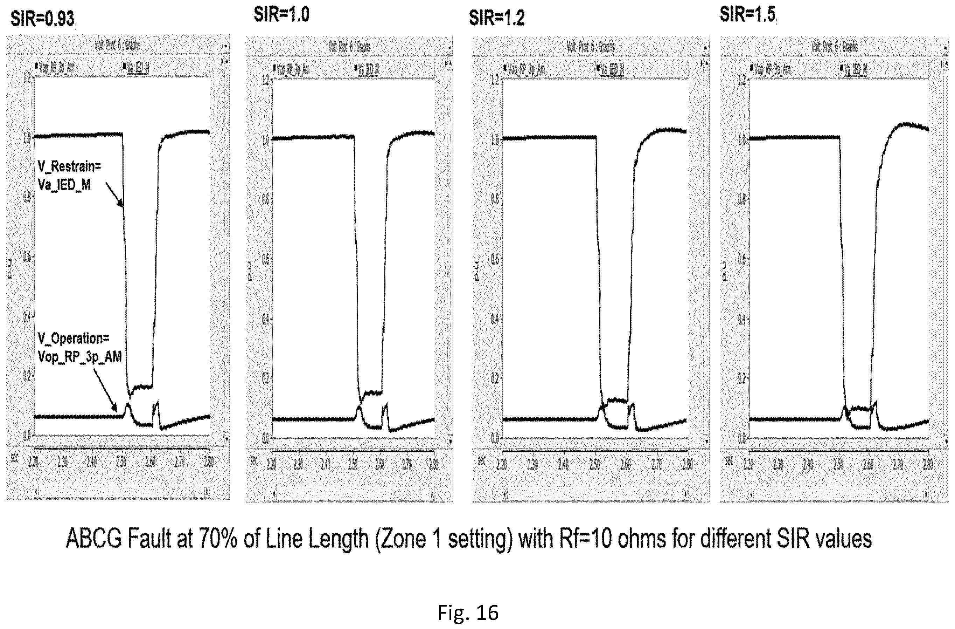

Further exploring on the impact of the grid side source strength can be done with different SIR values. Fig. 16 shows the exploring results. It can be noticed that for the same ABCG fault with Rf=10 ohm, the non-linear behavior will disappear when system strength is increased to SIR<1.0.

The present disclosure provides an additional solution to this problem by providing a new restrained quantity, which is to delay the local relay voltage for a couple of cycles, for example by 2 to 10 cycles, for example by 5 cycles. By this, it is possible to check the operational quantity and the restrain quantity during a three-phase fault. This addition is particularly useful in case of weak system conditions.

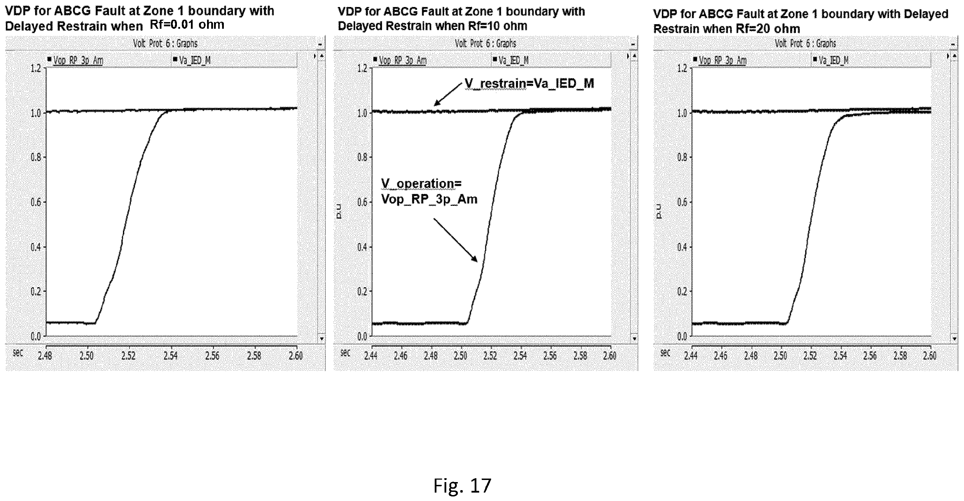

Fig. 17 shows the corresponding behavior by applying an ABCG fault at 70% of line length of the transmission line with different Rf values with the additional solution for weak systems. Three diagrams show the respective voltage based distance protection (VDP) for the cases with resistance values Rf=0.01 ohms, Rf=10 ohms and Rf=20 ohms, respectively. The upper curves show V_{op_RP}, while the lower curves show V_{IED}. Therein, the Z1 is set to 70% of line length.

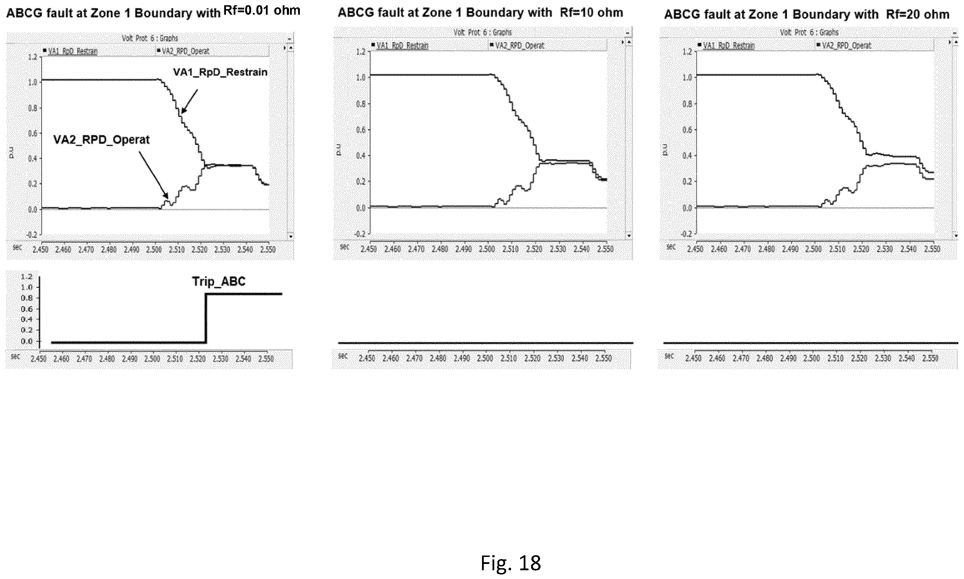

Fig. 18 shows the same behavior in the same cases with the respective trip signal in the lower diagrams. As can be seen, the non-linear impact has been mitigated by delaying the local relay phase A voltage for 5 cycles.

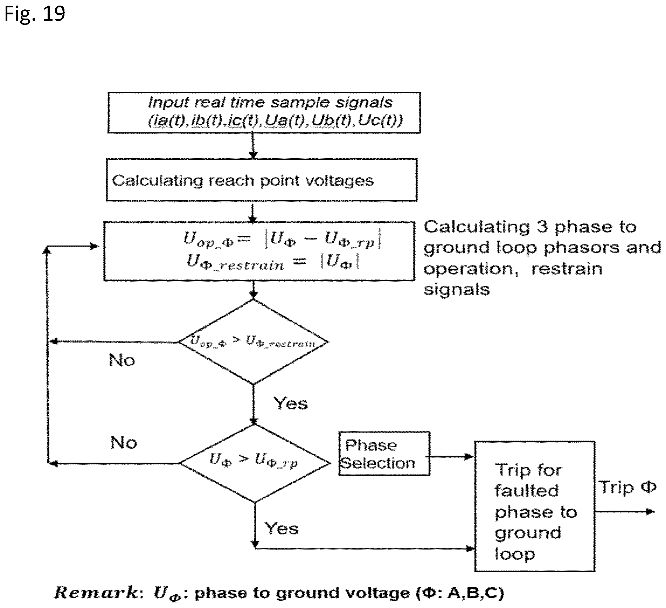

Fig. 19 shows a flow diagram of a method according to an embodiment for phase to ground loops as a general method to detect different types of faults related to phase to ground faults

In a first step shown on the very top of Fig. 19, real time sample signals iₐ(t), i_{b}(t), i_{c}(t), Uₐ(t), U_{b}(t) and U_{c}(t) are provided. In a subsequent step, reach point voltages are calculated. In a subsequent step, three phase to ground loop phasors, operation signals and restrain signals are calculated based on the real time sample signals and the reach point voltages as follows: ${U}_{op _ Φ} = \left|{U}_{Φ}-{U}_{Φ _ rp}\right|$ and ${U}_{Φ _ restrain} = \left|{U}_{Φ}\right| ,$

Where *U_{Φ}* are phase to ground voltages at relay location, in other words Φ is A, B or C. *U_{Φ_rp}* are phase to ground voltages at reach point, in other words Φ is A, B or C.In two subsequent steps, the operation signal, the restrain signal and the phasors are checked for two conditions as follows: ${U}_{op _ Φ} > {U}_{Φ _ restrain}$ and ${U}_{Φ} > {U}_{Φ _ rp} .$

The conditions may be checked in the order as shown in Fig. 19, i.e. the second condition is checked in the case that the first condition is affirmed. The conditions may alternatively be checked in reverse order or simultaneously. All of these steps as described above are performed continuously or regularly during line protection, and for each of the measured phase loops. Once it is encountered that both conditions are affirmed for a measured phase loop, a fault is detected and a trip signal for the faulted phase to ground loop is triggered.

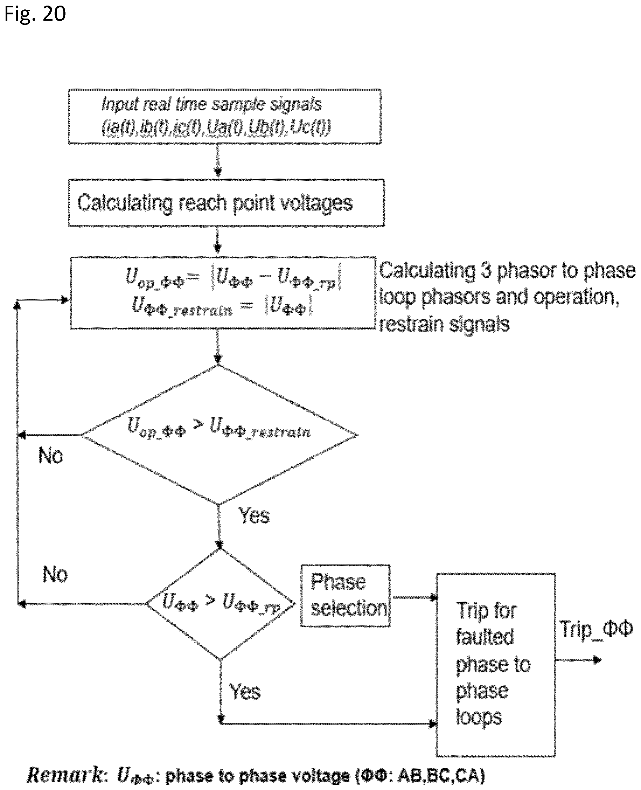

Fig. 20 shows a flow diagram of a method according to an embodiment for phase to phase loops as a general method to detect different types of faults related to phase to phase faults. The method is analogous to the method for the phase to ground loop scenario shown in Fig. 19.

In a first step shown on the very top of Fig. 20, real time sample signals iₐ(t), i_{b}(t), i_{c}(t), Uₐ(t), U_{b}(t) and U_{c}(t) are provided, where iₐ(t), i_{b}(t), i_{c}(t) are real time current singals and Uₐ(t), U_{b}(t) and U_{c}(t) are real time voltage signals. In a subsequent step, reach point voltages are calculated. In a subsequent step, three phase to phase loop phasors, operation signals and restrain signals are calculated based on the real time sample signals and the reach point voltages as follows: ${U}_{op _ ΦΦ} = \left|{U}_{ΦΦ}-{U}_{ΦΦ _ rp}\right|$ and ${U}_{ΦΦ _ restrain} = \left|{U}_{ΦΦ}\right| ,$ where U_{Φ Φ} are phase to phase voltages measured at relay location, in other words ΦΦ is AB, BC or CA.

*U*_{*ΦΦ*_*rp*} are phase to phase voltages calculated at reach point, in other words ΦΦ is AB, BC or CA. In two subsequent steps, the operation signal, the restrain signal and the phasors are checked for two conditions as follows: ${U}_{op _ ΦΦ} > {U}_{ΦΦ _ restrain}$ and ${U}_{ΦΦ} > {U}_{ΦΦ _ rp} .$

The conditions may be checked in the order as shown in Fig. 20, i.e. the second condition is checked in the case that the first condition is affirmed. The conditions may alternatively be checked in reverse order or simultaneously. All of these steps as described above are performed continuously or regularly during line protection, and for each of the measured phase loops. Once it is encountered that both conditions are affirmed for a measured phase loop, a fault is detected and a trip signal for the faulted phase to phase loop is triggered.

The present method is thus suitable for variable renewable sources connected systems and has a better dependability and security for different types of fault detection and protection. The present disclosure thus can greatly improve the dependability and security of existing distance protection solutions used in AC power systems with wind farm connections.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analogue implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for detecting a fault in a transmission line, the method comprising:
obtaining a real time current signal and a real time voltage signal at relay location of one end of the transmission line for each of measured phase loops,
determining a reach point voltage signal phasor and a relay point voltage phasor based on the real time current signal and the real time voltage signal for each of the measured phase loops,
determining an operation signal and a restrain signal for each of the measured phase loops,
determining whether the operation signal exceeds the restrain signal for a given measured phase loop,
detecting a fault if it is determined that the operation signal exceeds the restrain signal or the cosine of an angle difference between the relay point voltage phasor and the reach point voltage phasor is below zero.

2. Method according to claim 1, wherein the restrain signal is determined as a phasor amplitude of a relay point voltage signal for each of measured phase loops in phasor domain.

3. Method according to claim 1 or 2, wherein the operation signal is determined as a phasor amplitude of a difference between a relay point voltage signal and a reach point voltage signal for each of measured phase loops in phasor domain.

4. Method according to any of claims 1 to 3, wherein in the case that the real time voltage signal is a phase to ground loop voltage signal, a reach point voltage signal, a relay point voltage signal, the operation signal and the restraint signal are phase to ground loop voltage signals, and the phasor is a phase to ground loop phasor for each of measured phase loops, wherein a measured phase loop is a phase-to-ground pair, and
in the case that the real time voltage signal is a phase to phase loop voltage signal, a reach point voltage signal, a relay point voltage signal, the operation signal and the restraint signal are phase to phase loop voltage signals, and the phasor is a phase to phase loop phasor for each of measured phase loops, wherein a measured phase loop is a phase-to-phase pair.

5. Method according to any of claims 1 to 4, wherein the detected fault is an internal fault within a protection zone.

6. Method according to any of claims 1 to 5, further comprising causing a trip signal for the measured phase loop in response to detecting the fault.

7. A device for detecting a fault in a transmission line, the device comprising a processor being configured for:
obtaining a real time current signal and a real time voltage signal for each of measured phase loops,
determining a reach point voltage signal phasor and a relay point voltage phasor based on the real time current signal and the real time voltage signal for each of the measured phase loops,
determining an operation signal and a restrain signal for each of the measured phase loops,
determining whether the operation signal exceeds the restrain signal for a given measured phase loop,
detecting a fault if it is determined that the operation signal exceeds the restrain signal or the cosine of an angle difference between the relay point voltage phasor and the reach point voltage phasor is below zero.

8. The device of claim 7, the processor further being configured to determine the restrain signal as a phasor amplitude of a relay point voltage signal for each of measured phase loops.

9. The device of claim 7 or 8, the processor further being configured to determine the operation signal as a phasor amplitude of a difference of a reach point voltage signal and the relay point voltage signal for each of measured phase loops.

10. The device of any of claims 7 to 9, wherein in the case that the real time voltage signal is a phase to ground loop voltage signal, a reach point voltage signal, a relay point voltage signal, the operation signal and the restraint signal are phase to ground loop voltage signals, and the phasor is a phase to ground loop phasor for each of measured phase loops, wherein a measured phase loop is a phase-to-ground pair, and
in the case that the real time voltage signal is a phase to phase loop voltage signal, the reach point voltage signal, the relay point voltage signal, the operation signal and the restraint signal are phase to phase loop voltage signals, and the phasor is a phase to phase loop phasor for each of measured phase loops, wherein a measured phase loop is a phase-to-phase pair.

11. The device of any of claims 7 to 10, wherein the detected fault is an internal fault within a protection zone.

12. System for determining a fault in a three-phase transmission, the system comprising:
the device according to claims 7 to 11, and
a three-phase transmission line.

13. System of claim 12, wherein the transmission line connects a variable renewable source in a power grid, in particular a wind farm.
